# EUROPÄISCHE PATENTANMELDUNG

(11) **EP 4 654 437 A2**
(43) Veröffentlichungstag der Anmeldung: **26.11.2025**
(21) Anmeldenummer: 25174750.7
(22) Anmeldetag: 07.05.2025
(51) Int. Cl.: H02J 50/12, B60L 53/122

(54) **VORRICHTUNG ZUM INDUKTIVEN LADEN**

(30) Priorität: 22.05.2024 DE 102024204712
(71) Anmelder: Siemens Aktiengesellschaft, 80333 München (DE)
(72) Erfinder: Lee, Young Hun, 85598 Baldham (DE); Kraus, Denis, 80339 München (DE); Pavlovsky, Martin, 81675 München (DE); Simon, Alexander, 81829 München (DE); Finkenzeller, Michael, 83620 Feldkirchen-Westerham (DE); Poebl, Monika, 81667 München (DE)
(74) Vertreter: Siemens Patent Attorneys

(57) **Zusammenfassung**

Die Erfindung betrifft eine Vorrichtung zum induktiven Laden eines elektrischen Energiespeichers, insbesondere einer Batterie eines Elektrofahrzeugs, die Vorrichtung aufweisend (a) eine Wallbox-Schaltung (10) mit einem Umrichter (12) und einem Ausgang (14), (b) eine Boden-Schaltung (20) mit einem Eingang (22) und einer Ladespule (24), (c) ein Kabel (30), das eine elektrische Verbindung zwischen dem Ausgang der Wallbox-Schaltung und dem Eingang der Boden-Schaltung bereitstellt, (d) einen ersten, am Ausgang der Wallbox-Schaltung angebrachten Parallel-Kondensator (C1) mit einer ersten Kapazität und (e) einen zweiten, am Eingang der Boden-Schaltung angebrachten Parallel-Kondensator (C2) mit einer zweiten Kapazität, wobei die erste Kapazität und die zweite Kapazität so gewählt sind, dass eine vorbestimmte Resonanzfrequenz eines der Ladespule aufweisenden Schwingungskreises sowie eine Beschränkung eines im Kabel fließenden elektrischen Stroms (32) erreicht werden. Die Erfindung betrifft auch eine Verwendung der Vorrichtung sowie ein Verfahren.

## Beschreibung

### Technisches Gebiet

Die vorliegende Erfindung betrifft das Gebiet des induktiven Ladens von elektrischen Energiespeichern, insbesondere Vorrichtungen zum induktiven Laden eines elektrischen Energiespeichers, z.B. einer Batterie eines Elektrofahrzeugs, Verwendungen solcher Vorrichtungen sowie ein Verfahren.

### Technischer Hintergrund

Bekannte Vorrichtungen zum induktiven Laden von Batterien, z.B. in Elektrofahrzeugen, bestehen typisch aus zwei Schaltungen, eine Wallbox-Schaltung und eine Boden-Schaltung (Ground Assembly), die mit einem Kabel verbunden sind. Dieses Kabel muss für hohe Stromstärken ausgelegt sein. Ferner sind EMI-Filter notwendig zur Begrenzung von elektromagnetischer Störbeeinflussung. Die erforderlichen schweren Kabel und effiziente EMI-Filter sind mit Kosten und Aufwand verbunden.

### Zusammenfassung der Erfindung

Der vorliegenden Erfindung liegt die Aufgabe zugrunde, die Ströme im Kabel zwischen Wallbox-Schaltung und Boden-Schaltung zu reduzieren.

Eine Vorrichtung, deren Verwendung und ein Verfahren werden im Folgenden beschrieben.

Gemäß einem ersten Aspekt der Erfindung wird eine Vorrichtung zum induktiven Laden eines elektrischen Energiespeichers, insbesondere einer Batterie eines Elektrofahrzeugs beschrieben. Die Vorrichtung weist Folgendes auf: (a) eine Wallbox-Schaltung mit einem Umrichter und einem Ausgang, (b) eine Boden-Schaltung mit einem Eingang und einer Ladespule, (c) ein Kabel, das eine elektrische Verbindung zwischen dem Ausgang der Wallbox-Schaltung und dem Eingang der Boden-Schaltung bereitstellt, (d) einen ersten, am Ausgang der Wallbox-Schaltung angebrachten Parallel-Kondensator mit einer ersten Kapazität und (e) einen zweiten, am Eingang der Boden-Schaltung angebrachten Parallel-Kondensator mit einer zweiten Kapazität. Die erste Kapazität und die zweite Kapazität sind so gewählt, dass eine vorbestimmte Resonanzfrequenz eines der Ladespule aufweisenden Schwingungskreises sowie eine Beschränkung eines im Kabel fließenden elektrischen Stroms erreicht werden.

Der beschriebenen Vorrichtung liegt die Erkenntnis zugrunde, dass durch das Anbringen von Parallel-Kondensatoren an beiden Enden des Kabels, d.h. sowohl am Ausgang der Wallbox-Schaltung als auch am Eingang der Boden-Schaltung, eine erhebliche Reduktion des Kabelstroms erreicht werden kann, ohne dabei die Ladeleistung negativ zu beeinflussen. Mit anderen Worten kann im Vergleich mit Konfigurationen, die keinen oder nur eine einzelnen (entweder am Ausgang der Wallbox-Schaltung oder am Eingang der Boden-Schaltung angeordnete) Parallel-Kondensator aufweisen, die gleiche Ladeleistung bei niedrigerem Kabelstrom erreicht werden. Somit sind die Erfordernisse an Kabel und EMI-Filter entsprechend geringer, weshalb letztere einfacher und kostengünstiger gestaltet werden können.

Gemäß einem Ausführungsbeispiel ist die erste Kapazität gleich der zweiten Kapazität.

Dieses Ausführungsbeispiel ist besonders einfach zu implementieren, indem beide Parallel-Kondensatoren die gleiche Kapazität haben. Letztere soll lediglich (zusammen mit bzw. in Abhängigkeit von weiteren Impedanzen in der Boden-Schaltung) so gewählt werden, dass die vorbestimmte Resonanzfrequenz des Schwingungskreises eingestellt wird.

Gemäß einem weiteren Ausführungsbeispiel weisen die erste Kapazität und die zweite Kapazität ein Verhältnis von 1:4 bis 4:1, insbesondere von 1:3 bis 3:1 auf.

Mit anderen Worten liegt das Verhältnis zwischen der ersten Kapazität, nachfolgend auch C1 genannt, und der zweiten Kapazität, nachfolgend auch C2 genannt, C1/C2 zwischen 1:4 und 4:1, d.h. 1/4 ≤ C1/C2 ≤ 4, insbesondere 1/3 ≤ C1/C2 ≤ 3. Durch sorgfältige Bestimmung der Kapazitäten C1 und C2 kann hier eine Minimierung (und nicht lediglich eine Reduktion) des Kabelstroms erreicht werden.

Die Summe der ersten und zweiten Kapazität bildet die für das Resonanzverhalten maßgebliche Gesamtparallelkapazität Cp, d.h. Cp = C1 + C2, und muss folglich unter Berücksichtigung der weiteren Impedanzen in den Schaltungen und im Kabel festgelegt werden. Mit Bezug auf Cp führen die obigen Ausführungen zum Verhältnis zwischen C1 und C2 dann dazu, dass C1 zwischen 20% und 80% von Cp beträgt, während C2 zwischen 80% und 20% von Cp beträgt, insbesondere dass C1 zwischen 25% und 75% von Cp beträgt, während C2 zwischen 75% und 25% von Cp beträgt.

Gemäß einem weiteren Ausführungsbeispiel ist die vorbestimmte Resonanzfrequenz im Intervall von 79 kHz bis 90 kHz oder im Intervall von 19 kHz bis 25 kHz enthalten.

Das Intervall von 79 kHz bis 90 kHz entspricht den Erfordernissen des Standards für induktives Laden von Elektrofahrzeugen (SAE J2954 (USA/International) oder IEC 61980 (EU)), während das Intervall von 19 kHz bis 25 kHz den Erfordernissen des Standards für induktives Laden von Elektrobussen entspricht (IEC 61980 (EU)).

Gemäß einem weiteren Ausführungsbeispiel betrifft die Beschränkung des im Kabel fließenden elektrischen Stroms solche Stromkomponenten, deren Frequenz gleich der vorbestimmten Resonanzfrequenz und/oder höher als die vorbestimmte Resonanzfrequenz sind.

Mit anderen Worten können Stromkomponenten mit der vorbestimmten Resonanzfrequenz und/oder mit höheren Frequenzen, insbesondere harmonische Stromkomponenten, beschränkt werden.

Gemäß einem zweiten Aspekt der Erfindung wird die Verwendung einer Vorrichtung gemäß dem ersten Aspekt zum Laden eines elektrischen Energiespeichers, insbesondere zum Laden einer Batterie eines Elektrofahrzeugs, beschrieben.

Der beschriebenen Verwendung liegt im Wesentlichen die gleiche Erkenntnis zugrunde, wie der oben beschriebene Vorrichtung gemäß dem ersten Aspekt, nämlich dass durch das Anbringen von Parallel-Kondensatoren an beiden Enden des Kabels, d.h. sowohl am Ausgang der Wallbox-Schaltung als auch am Eingang der Boden-Schaltung, eine erhebliche Reduktion des Kabelstroms erreicht werden kann, ohne dabei die Ladeleistung negativ zu beeinflussen.

Gemäß einem dritten Aspekt der Erfindung wird ein Verfahren beschrieben, das Folgendes aufweist: (a) Bereitstellen einer Wallbox-Schaltung mit einem Umrichter und einem Ausgang, (b) Bereitstellen einer Boden-Schaltung mit einem Eingang und einer Ladespule, (c) Bereitstellen eines Kabels, das eine elektrische Verbindung zwischen dem Ausgang der Wallbox-Schaltung und dem Eingang der Boden-Schaltung bereitstellt, (d) Bereitstellen eines ersten Parallel-Kondensators, der am Ausgang der Wallbox-Schaltung angebracht ist und eine erste Kapazität aufweist, und (e) Bereitstellen eines zweiten Parallel-Kondensators, der am Eingang der Boden-Schaltung angebracht ist und eine zweite Kapazität aufweist, wobei die erste Kapazität und die zweite Kapazität so gewählt sind, dass eine vorbestimmte Resonanzfrequenz eines der Ladespule aufweisenden Schwingungskreises und eine Beschränkung eines im Kabel fließenden elektrischen Stroms erreicht werden.

Auch das Verfahren gemäß diesem dritten Aspekt basiert im Wesentlichen auf der gleichen Idee wie die oben beschriebene Vorrichtung gemäß dem ersten Aspekt.

### Kurze Beschreibung der Zeichnungen

Figur 1 zeigt eine induktive Ladevorrichtung gemäß dem Stand der Technik.
Figur 2 zeigt eine induktive Ladevorrichtung gemäß einem Ausführungsbeispiel der vorliegenden Erfindung.
Figur 3 zeigt den Zusammenhang zwischen Kabelstrom und Frequenz für die in der Figur 1 gezeigte Ladevorrichtung gemäß dem Stand der Technik.
Figur 4 zeigt den Zusammenhang zwischen Kabelstrom und Frequenz für die in der Figur 2 gezeigte Ladevorrichtung gemäß der vorliegenden Erfindung.
Figur 5 zeigt verschiedene Stromverläufe in der in Figur 2 gezeigten Ladevorrichtung.

### Detaillierte Beschreibung der Zeichnungen

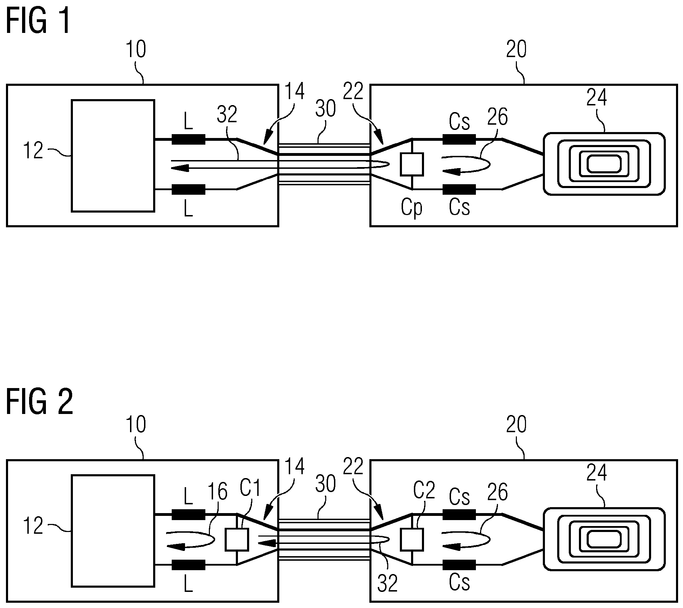

Die Figur 1 zeigt eine induktive Ladevorrichtung gemäß dem Stand der Technik, die zum induktiven Laden eines Elektrofahrzeugs über eine im Boden, z.B. unterhalb eines Parkplatzes, angebrachte Ladespule eingerichtet ist. Die Ladevorrichtung weist eine Wallbox-Schaltung 10, eine Boden-Schaltung 20 und ein Kabel 30 auf. Die Wallbox-Schaltung weist einen Umrichter 12, Induktivitäten L und einen Ausgang 14 auf. Die Bodenschaltung 20 weist einen Eingang 22, einen Parallel-Kondensator Cp, Reihenkondensatoren Cs und eine Ladespule 24 auf. Das Kabel 30 stellt eine elektrische Verbindung zwischen dem Ausgang 14 der Wallbox-Schaltung 10 und dem Eingang 22 der Boden-Schaltung 20 bereit. Es sei darauf hingewiesen, dass die Vorrichtung noch weitere, im vorliegenden Zusammenhang aber nicht relevante Bauelemente und Merkmale aufweist, die zwecks Vereinfachung nicht dargestellt sind.

Wenn ein entsprechend ausgestattetes Fahrzeug, insbesondere ein Elektrofahrzeug oder ein Bus, Lastwagen oder ähnliches, mit einer Empfängerspule über der Bodenspule 24 positioniert ist, kann die Batterie des Fahrzeugs durch induktive Kopplung zwischen der Bodenspule 24 und der Empfängerspule geladen werden. Dabei fließen zum einen, wie mit dem Pfeil 32 dargestellt, ein Strom von der Wallbox-Schaltung 10 durch Kabel 30, durch Parallel-Kondensator Cp und zurück durch Kabel 30 zu der Wallbox-Schaltung 10 zurück und zum anderen, wie mit dem Pfeil 26 dargestellt, ein Strom in dem aus dem Parallel-Kondensator Cp, den beiden ReihenKondensatoren Cs und der Ladespule 24 bestehenden Schwingungskreis. Wie eingangs erwähnt, muss das Kabel 30 für den Strom 32 ausgelegt und mit EMI-Filtern ausgestattet sein.

Wie nachfolgend erläutert können die Anforderungen an Kabel 30 und EMI-Filter mit Hilfe der vorliegenden Erfindung bedeutend zurückgefahren werden, indem der Stromfluss im Kabel 30 beschränkt wird.

Die Figur 2 zeigt eine induktive Ladevorrichtung gemäß einem Ausführungsbeispiel der vorliegenden Erfindung. Die erfindungsgemäße Ladevorrichtung ähnelt der in Figur 1 gezeigten Ladevorrichtung sehr und weist auch eine Wallbox-Schaltung 10, eine Boden-Schaltung 20 und ein Kabel 30 auf. Die Wallbox-Schaltung weist einen Umrichter 12, Induktivitäten L und einen Ausgang 14 auf. Anders als in der in Figur 1 gezeigten Ladevorrichtung, weist die Wallbox-Schaltung 10 aber zusätzlich einen am Ausgang 14 angebrachten (ersten) Parallel-Kondensator C1 auf. Die Bodenschaltung 20 weist einen Eingang 22, einen (zweiten) Parallel-Kondensator C2, Reihenkondensatoren Cs und eine Ladespule 24 auf. Das Kabel 30 stellt eine elektrische Verbindung zwischen dem Ausgang 14 der Wallbox-Schaltung 10 und dem Eingang 22 der Boden-Schaltung 20 bereit. Es sei auch hier darauf hingewiesen, dass die Vorrichtung noch weitere, im vorliegenden Zusammenhang aber nicht relevante Bauelemente und Merkmale aufweisen mag, die zwecks Vereinfachung nicht dargestellt sind.

Aufgrund des zusätzlichen Parallel-Kondensators C1 sind die Stromverläufe anders als oben in Verbindung mit der Figur 1 beschrieben. Wie mit dem Pfeil 16 gekennzeichnet, läuft beim Laden nun ein Strom vom Umrichter 12 durch den ersten Parallel-kondensator C1 und zurück zum Umrichter 12. Der mit dem Pfeil 32 gekennzeichneten Strom durch das Kabel 30 ist hier - aufgrund des Stroms 16 - geringer als in der oben in Verbindung mit Figur 1 erläuterten Vorrichtung aus dem Stand der Technik. Der mit dem Pfeil 26 gekennzeichneten Strom 26 in der Boden-Schaltung 20 ändert sich nahezu nicht. Dabei sollen die Parallel-Kondensatoren so gewählt werden, dass C1 + C2 = Cp. Mit anderen Worten unterscheidet sich die erfindungsgemäß Vorrichtung von der bekannten, in der Figur 1 gezeigten Vorrichtung darin, dass der Parallel-Kondensator Cp in zwei Parallel-Kondensatoren aufgeteilt worden ist: einen ersten Parallel-Kondensator C1 am Ausgang der Wallbox-Schaltung 10 und einen zweiten Parallel-Kondensator C2 am Eingang der Boden-Schaltung 20. Abgesehen von dem deutlich geringeren Stromfluss im Kabel 30 - und den damit einhergehenden Vorteilen - weist die erfindungsgemäße Ladevorrichtung im Wesentlichen die gleichen Eigenschaften wie die Vorrichtung aus dem Stand der Technik auf, insbesondere was die Ladeleistung betrifft. Mit der an sich geringfügigen, erfindungsgemäßen Maßnahme der Aufteilung des Parallel-Kondensators Cp in zwei Parallel-Kondensatoren C1 und C2 können somit erhebliche Kosten in Verbindung mit Kabelmaterial, Abschirmung und EMI-Filtern eingespart und die von der Vorrichtung ausgehenden Störungen insgesamt reduziert werden.

Für das Auswählen der zwei Parallel-Kondensatoren C1 und C2 bestehen mehrere Möglichkeiten. Eine einfache Möglichkeit besteht darin, zwei Kondensatoren mit identischer Kapazität zu verwenden, d.h. C1 = C2 =Cp/2. Diese Möglichkeit wird in den meisten Fällen zu einer beachtlichen Verbesserung führen. Es können aber auch Parallel-Kondensatoren mit unterschiedlichen Kapazitäten eingesetzt werden, wobei ein Verhältnis C1/C2 zwischen 1:4 und 4:1, insbesondere zwischen 1:3 und 3:1 vorteilhaft ist. Mit Bezug auf die gesamte ParallelKapazität Cp lässt sich dies auch so ausdrücken, dass C1 zwischen 20% und 80% von Cp beträgt, während C2 zwischen 80% und 20% von Cp beträgt, insbesondere dass C1 zwischen 25% und 75% von Cp beträgt, während C2 zwischen 75% und 25% von Cp beträgt. Durch diese Variationsmöglichkeiten kann insbesondere beeinflusst werden, welche spektrale Komponenten des Stroms im Kabel 30 besonders beschränkt werden. In einigen Fällen stellt die Stromkomponente bei der Resonanzfrequenz ein besonderes Problem dar, in anderen Fällen müssen insbesondere eine oder mehrere harmonische Stromkomponenten, d.h. Stromkomponenten, deren Frequenz höher als die Resonanzfrequenz ist, beschränkt werden.

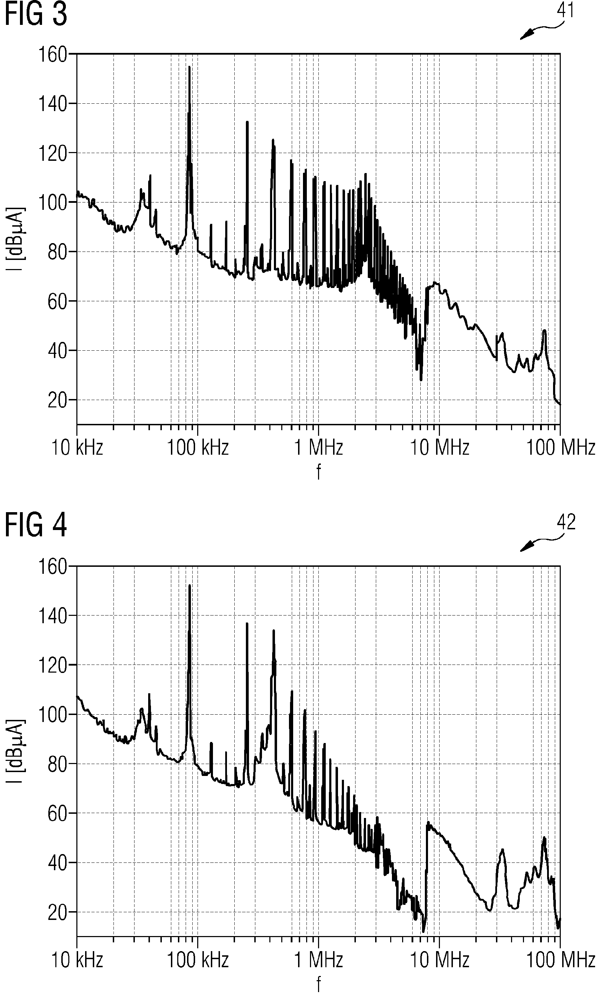

Figur 3 zeigt eine Abbildung 41 von dem Zusammenhang zwischen Kabelstrom I (dBµA) und Frequenz f (Hz) für die in der Figur 1 gezeigte Ladevorrichtung gemäß dem Stand der Technik. Die vorbestimmte Resonanzfrequenz ist in dem gezeigten Beispiel 85 kHz und entspricht somit dem Standard für das Laden von Elektrofahrzeugen. Bei dieser Frequenz findet sich folglich auch der höchste Wert der Stromstärke, I ≈ 155 dBµA. Für Frequenzen zwischen 85 kHz und etwa 3 MHz sind eine Reihe von Harmonischen erkennbar, wobei die Stromstärke über 100 dBµA liegt. Für Frequenzen über 3 MHz fällt die Stromstärke deutlich ab.

Figur 4 zeigt eine Abbildung 42 von dem Zusammenhang zwischen Kabelstrom I (dBµA) und Frequenz f (Hz) und Frequenz für die in der Figur 2 gezeigte Ladevorrichtung gemäß der vorliegenden Erfindung. In dem gezeigten Beispiel ist das Verhältnis zwischen den Kapazitäten C1/C2 = 1:2. Auch hier ist die vorbestimmte Resonanzfrequenz gleich 85 kHz, wobei in Vergleich mit der Abbildung 41 die Stromstärke hier etwas niedriger liegt, I ≈ 150 dBµA. Weiter erkennbar ist eine signifikante Reduktion bei den Harmonischen, insbesondere für Frequenzen über 1 MHz, wo die Stromstärke um etwa 20 dBµA niedriger ist. Somit können die EMI-Filter entsprechend niedriger ausgelegt werden und das Kabel 30 auf diese niedrigeren Ströme abgestuft werden.

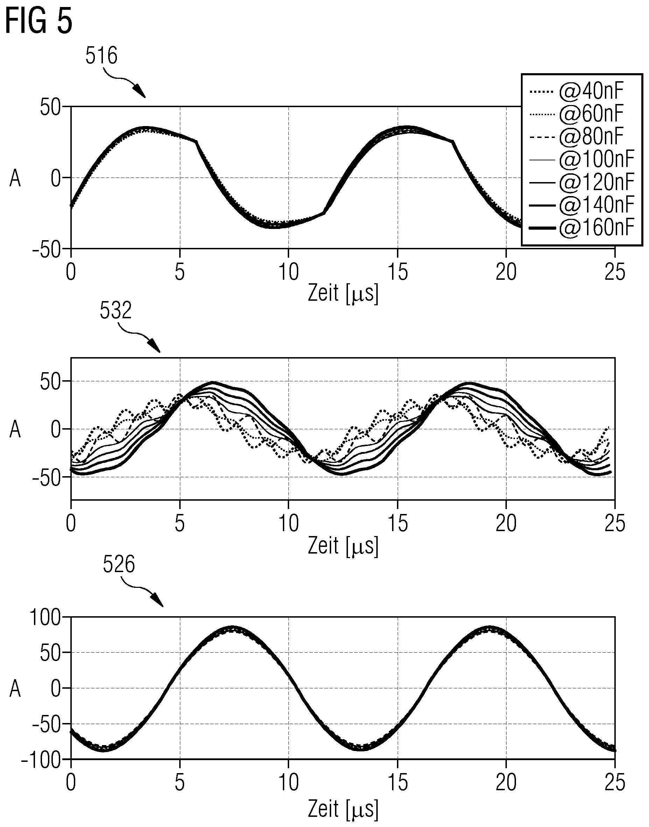

Figur 5 zeigt verschiedene Stromverläufe in der erfindungsgemäßen, in Figur 2 gezeigten Ladevorrichtung für verschiedene Verhältnisse zwischen den Kapazitäten der Parallelkondensatoren C1 und C2. Spezifischer zeigt das obere Diagramm 516 in der Figur 5 den zeitlichen Verlauf des Umrichterstroms 16 (vgl. Figur 2) für C1 = 40 nF, C1 = 60 nF, C1 = 80 nF, C1 = 100 nF, C1 = 120 nF, C1 = 140 nF und C1 = 160 nF, wobei die gesamte Parallelkapazität Cp immer gleich ist: Cp = C1 + C2 = 270 nF. Es sei darauf hingewiesen, dass die hier genannten Kapazitäten lediglich als Beispiele zu verstehen sind und dass viele andere Werte möglich sind. Das mittlere Diagramm 532 zeigt den jeweils entsprechenden zeitlichen Verlauf des Kabelstroms 32 (vgl. Figur 2). Hier ist es erkennbar, dass für die drei kleinsten Werte von C1, d.h. C1 = 40 nF, C1 = 60 nF und C1 = 80 nF, deutlich stärkere Überschwingungen auftreten als für die weiteren Fälle. Somit werden für C1 > 80 nF weniger hochfrequente Störungen aufgrund des Kabelstroms auftreten. Auf der anderen Seite wird die Dämpfung des Kabelstroms geringer für höheren Werte von C1. Das untere Diagramm 526 zeigt den jeweils entsprechenden zeitlichen Verlauf des Spulenstroms 26 (vgl. Figur 2). Hier sind Variationen kaum erkennbar, d.h., das Verhältnis C1/C2 spielt für den Spulenstrom keine wesentliche Rolle.

Es sei darauf hingewiesen, dass der Begriff "aufweisend" andere Elemente oder Schritte nicht ausschließt und die Verwendung des Artikels "ein" eine Vielzahl nicht ausschließt. Auch Elemente, die in Verbindung mit verschiedenen Ausführungsformen beschrieben werden, können kombiniert werden. Es ist auch darauf hinzuweisen, dass Bezugszeichen in den Ansprüchen nicht so ausgelegt werden sollten, dass sie den Umfang der Ansprüche einschränken.

### Bezugszeichenliste

- 10: Wallbox-Schaltung
- 12: Umrichter
- 14: Ausgang
- 16: Pfeil
- 20: Boden-Schaltung
- 22: Eingang
- 24: Ladespule
- 26: Pfeil
- 30: Kabel
- 32: Pfeil
- 41: Abbildung
- 42: Abbildung
- Cp: Parallel-Kondensator
- Cs: Reihen-Kondensator
- C1: Parallel-Kondensator
- C2: Parallel-Kondensator
- f: Frequenz
- I: Stromstärke
- L: Induktanz

## Patentansprüche

1. Vorrichtung zum induktiven Laden eines elektrischen Energiespeichers, insbesondere einer Batterie eines Elektrofahrzeugs, die Vorrichtung aufweisend
eine Wallbox-Schaltung (10) mit einem Umrichter (12) und einem Ausgang (14),
eine Boden-Schaltung (20) mit einem Eingang (22) und einer Ladespule (24),
ein Kabel (30), das eine elektrische Verbindung zwischen dem Ausgang der Wallbox-Schaltung und dem Eingang der Boden-Schaltung bereitstellt,
einen ersten, am Ausgang der Wallbox-Schaltung angebrachten Parallel-Kondensator (C1) mit einer ersten Kapazität und
einen zweiten, am Eingang der Boden-Schaltung angebrachten Parallel-Kondensator (C2) mit einer zweiten Kapazität,
wobei die erste Kapazität und die zweite Kapazität so gewählt sind, dass eine vorbestimmte Resonanzfrequenz eines der Ladespule aufweisenden Schwingungskreises sowie eine Beschränkung eines im Kabel fließenden elektrischen Stroms (32, I) erreicht werden.

2. Die Vorrichtung gemäß Anspruch 1, wobei die erste Kapazität gleich der zweiten Kapazität ist.

3. Die Vorrichtung gemäß Anspruch 1, wobei die erste Kapazität und die zweite Kapazität ein Verhältnis von 1:4 bis 4:1, insbesondere von 1:3 bis 3:1 aufweisen.

4. Die Vorrichtung gemäß einem der vorhergehenden Ansprüche, wobei die vorbestimmte Resonanzfrequenz im Intervall von 79 kHz bis 90 kHz oder im Intervall von 19 kHz bis 25 kHz enthalten ist.

5. Die Vorrichtung gemäß einem der vorhergehenden Ansprüche, wobei die Beschränkung des im Kabel fließenden elektrischen Stroms solche Stromkomponenten betrifft, deren Frequenz gleich der vorbestimmten Resonanzfrequenz und/oder höher als die vorbestimmte Resonanzfrequenz sind.

6. Verwendung einer Vorrichtung gemäß einem der vorhergehenden Ansprüche zum Laden eines elektrischen Energiespeichers, insbesondere zum Laden einer Batterie eines Elektrofahrzeugs.

7. Verfahren aufweisend
Bereitstellen einer Wallbox-Schaltung (10) mit einem Umrichter (12) und einem Ausgang (14),
Bereitstellen einer Boden-Schaltung (20) mit einem Eingang (22) und einer Ladespule (24),
Bereitstellen eines Kabels (30), das eine elektrische Verbindung zwischen dem Ausgang der Wallbox-Schaltung und dem Eingang der Boden-Schaltung bereitstellt,
Bereitstellen eines ersten Parallel-Kondensators (C1), der am Ausgang der Wallbox-Schaltung angebracht ist und eine erste Kapazität aufweist, und
Bereitstellen eines zweiten Parallel-Kondensators (C2), der am Eingang der Boden-Schaltung angebracht ist und eine zweite Kapazität aufweist,
wobei die erste Kapazität und die zweite Kapazität so gewählt sind, dass eine vorbestimmte Resonanzfrequenz eines der Ladespule aufweisenden Schwingungskreises und eine Beschränkung eines im Kabel fließenden elektrischen Stroms (32) erreicht werden.
